# FASCICULE DE BREVET EUROPEEN

(11) **EP 1 302 142 B1**
(45) Date de publication et mention de la délivrance du brevet: **05.04.2006**
(21) Numéro de dépôt: 02292356.9
(22) Date de dépôt: 25.09.2002
(51) Int. Cl.: A47J 37/06

(54) **Dispositif de rangement de coupelles pour un appareil à raclette et appareil à raclette muni d'un tel dispositif**
Speichervorrichtung für Pfännchen für ein Raclettegerät und Raclettegerät mit einer solchen Vorrichtung
Storage device for pans in a raclette device and raclette device with such a device

(30) Priorité: 12.10.2001 FR 0113216
(43) Date de publication de la demande: 16.04.2003
(73) Titulaire: SEB S.A., 69130 Ecully (FR)
(72) Inventeur: Dauvergne, Francois, 74600 Seynod (FR)
(74) Mandataire: Rémont, Claude

(56) Documents cités:
- DE-A- 19 638 862
- DE-U- 9 218 051
- DE-U- 29 919 965
- FR-A- 2 694 800
- FR-A- 2 740 539

## Description

La présente invention concerne un dispositif de rangement de coupelles pour un appareil à raclette. Elle concerne également un appareil à raclette muni d'un tel dispositif.

De façon courante, pour déguster une raclette, on emploie un appareil à raclette. Un tel appareil comprend un socle, un réflecteur qui repose sur ce socle et qui est apte à recevoir des coupelles ainsi qu'un système de chauffe disposé au voisinage du réflecteur.

Après initialisation du système de chauffe, l'utilisateur positionne, sur le réflecteur et sous ledit système de chauffe, une ou plusieurs coupelles contenant chacune une portion de fromage à raclette de taille adaptée à la coupelle pour la faire fondre.

Il arrive fréquemment qu'au cours d'un repas, l'utilisateur souhaite faire une pose et donc interrompre momentanément la préparation de telles portions ; il se retrouve alors encombré d'une coupelle brûlante dont il souhaite se débarrasser. Ce cas de figure se présente également en fin de repas, lorsque l'utilisateur a terminé sa dégustation de raclette, le système de chauffe émettant un rayonnement thermique pendant un certain laps de temps après déconnexion.

Une première solution consiste à repositionner la coupelle vide et brûlante sur le réflecteur et sous le système de chauffe.

Cependant, ce système de chauffe émettant un rayonnement thermique, notamment lorsqu'il est encore en fonctionnement, présente l'inconvénient majeur de carboniser les résidus de fromage restant dans la coupelle, avec un dégagement de fumées accompagnées d'odeurs de brûlé, gênantes et désagréables pour l'utilisateur.

Une autre solution pour éviter le problème ci-dessus est celle décrite dans le modèle d'utilité DE 9116362U qui enseigne un dispositif de rangement de coupelles pour appareil à raclette. Ce dispositif comprend au moins un logement accessible de l'extérieur de l'appareil à raclette et apte à recevoir au moins une coupelle. Ces logements étant disposés à une certaine distance verticale du réflecteur, ils ne sont plus directement soumis aux rayonnements du système de chauffe.

Toutefois, le nettoyage d'un appareil à raclette de ce type n'est pas aisé, l'intérieur du logement étant difficilement accessible ; se posent en outre des problèmes annexes liés à l'étanchéité du circuit électrique alimentant l'appareil à raclette.

De plus, après positionnement de chacune des coupelles dans son logement respectif, le manche des coupelles fait saillie par rapport au gabarit général de l'appareil à raclette et ce, quelle que soit la configuration de logement retenue parmi celles décrites dans DE 9116362U. Aussi, outre un encombrement maximal de l'ensemble sur la table, ce dispositif de rangement de coupelles présente un danger pour l'utilisateur qui peut "accrocher" un manche de coupelle.

Enfin, un tel appareil à raclette présente un encombrement maximum, notamment dans le sens de la verticale, ne facilitant pas son rangement dans les placards par exemple.

Le but de la présente invention est de résoudre l'ensemble des inconvénients présentés par les dispositifs de l'art antérieur qui viennent d'être décrits, et de proposer un dispositif qui permette de recevoir les coupelles momentanément inutilisées, en l'absence de dégagement d'odeurs ou de fumées dues à la carbonisation des résidus de fromage, qui puisse être en outre nettoyé facilement et sans risque de court-circuit, et qui permette une optimisation du rangement des coupelles, ainsi que de l'appareil à raclette lui-même.

La présente invention a donc pour objet un dispositif du type précité tel que constitué par une embase venant se placer sous l'appareil à raclette et séparable de celui-ci, ladite embase comprenant un fond délimitant, avec la face inférieure de l'appareil à raclette, un espace de rangement des coupelles, et des moyens de support aptes à coopérer avec des moyens de support complémentaires de l'appareil à raclette.

Ainsi, le dispositif selon l'invention permet de recevoir les coupelles momentanément inutilisées dans un espace distant du système de chauffe.

La configuration de cet espace permet une circulation d'air optimisée autour des coupelles qui y sont déposées et, par conséquent, un refroidissement plus rapide de ces dernières, comparé à celui des coupelles disposées dans les logements enseignés par DE 9116362U.

De par sa nature séparable de l'appareil à raclette, l'embase peut être fabriquée dans un matériau différent de celui de la structure de base de l'appareil à raclette, voire moins coûteux, ce qui présente un intérêt économique important ainsi qu'un large choix dans les matériaux susceptibles d'être utilisés.

De plus, l'embase peut être configurée pour s'adapter à des modèles d'appareils à raclette déjà existants et commercialisés.

Après avoir été séparée de l'appareil à raclette, l'embase peut également servir de plateau de transport des coupelles ou autre. Son nettoyage est en outre facilité et sans risque du point de vue électrique.

L'embase peut également être commercialisée et stockée ou rangée indépendamment de l'appareil à raclette sous lequel elle est destinée à être placée.

Dans une version préférentielle de l'invention, les moyens de support de l'embase sont complétés chacun par une entretoise s'étendant verticalement vers les moyens de support de l'appareil à raclette.

Ainsi, il devient possible de moduler, dans le sens de la verticale, l'espace de rangement des coupelles, permettant notamment d'envisager l'empilement d'au moins deux coupelles l'une sur l'autre.

L'invention concerne également un appareil à raclette comprenant un socle, un réflecteur qui repose sur le socle et qui est destiné à recevoir des coupelles, ainsi qu'un système de chauffe disposé au voisinage du réflecteur.

Selon l'invention, l'appareil à raclette comprend en outre une embase amovible munie de moyens de support sur lesquels vient reposer le socle, ladite embase délimitant avec le socle un espace de rangement accessible de l'extérieur de l'appareil à raclette et destiné à recevoir notamment des coupelles.

Dans une version avantageuse de l'invention, le socle comprend des moyens de support complémentaires des moyens de support de l'embase.

Dans une version préférée de l'invention, les moyens de support de l'embase et les moyens de support du socle ont les uns une empreinte mâle, les autres une empreinte femelle.

Une telle configuration des moyens de support respectifs de l'embase et du socle permet un positionnement sûr du socle de l'appareil à raclette sur l'embase.

D'autres caractéristiques et avantages de l'invention résulteront de la description qui va suivre donnée à titre d'exemples non limitatifs et faite en référence aux figures annexées dans lesquelles :
- la figure 1 est une vue schématique en élévation d'un appareil à raclette selon l'invention ;
- la figure 2 est une première vue en coupe partielle de la figure 1 selon le plan vertical passant par l'axe II-II ;
- la figure 3 est une seconde vue en coupe partielle de la figure 1 selon le plan vertical passant par l'axe III-III ;
- la figure 4 est une troisième vue en coupe partielle de la figure 1 selon le plan vertical passant par l'axe IV-IV ;
- la figure 5 est une vue schématique en élévation d'un dispositif de rangement de coupelles selon l'invention.

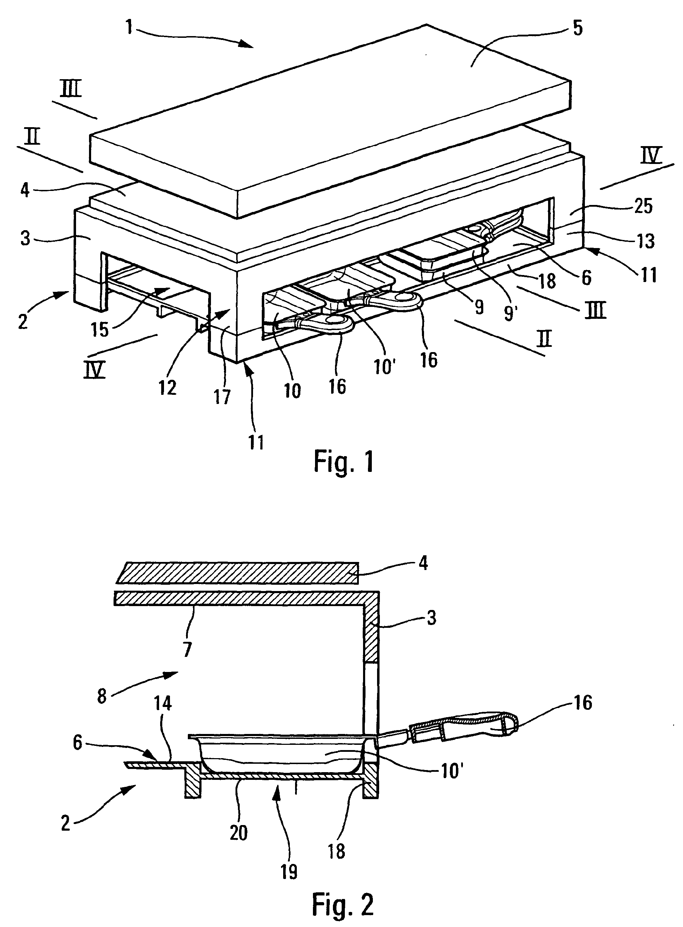

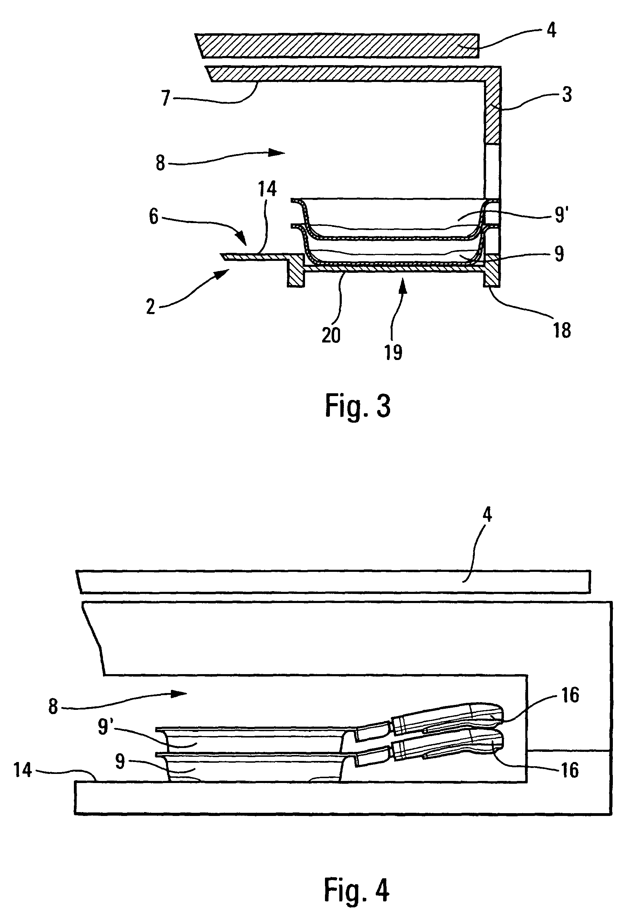

Les éléments communs aux figures 1 à 5 sont repérés dans la suite par des références numériques identiques.

Sur la figure 1, on a représenté schématiquement une vue en élévation d'un appareil à raclette 1 de forme rectangulaire comprenant un dispositif 2 de rangement de coupelles selon l'invention.

L'appareil à raclette 1 comprend en outre un socle 3, un réflecteur 4 reposant sur le socle 3 et qui est destiné à recevoir des coupelles, un système de chauffe 5 disposé au voisinage du réflecteur 4.

Le socle 3 est positionné sur le dispositif 2 de rangement de coupelles conforme à l'invention, dispositif qui est constitué par une embase 2 amovible comprenant un fond 6.

Le fond 6 de l'embase 2 délimite, avec la face inférieure 7 du socle 3, un espace de rangement 8 accessible de l'extérieur de l'appareil à raclette 1.

Comme représenté aux figures 1 à 4, des coupelles 9, 9' et 10, 10' sont disposées sur le fond 6 de l'embase 2, à l'intérieur de l'espace de rangement 8.

L'embase 2 est munie de moyens de support 11 aptes à coopérer avec des moyens de support 12 complémentaires du socle 3 de l'appareil à raclette 1.

Dans la représentation de la figure 1, les moyens de support 12 du socle 3 comprennent des pieds 17 faisant saillie à partir de la face inférieure 7 du socle 3 vers l'embase 2 ; ces pieds 17 reposent sur les moyens de support 11 de l'embase 2 situés dans les coins du fond 6 de l'embase 2 faisant face au socle 3.

L'extrémité des pieds 17 des moyens de support 12 du socle 3 peut comporter des empreintes, de forme complémentaire de celle des empreintes correspondantes des moyens de support 11 de l'embase 2.

De manière préférée, les moyens de support 11 de l'embase 2 et les moyens de support 12 du socle 3 ont les uns une empreinte mâle, les autres une empreinte femelle.

Une telle conformation permet de réaliser un emboîtement simple et fiable du socle 3 sur l'embase 2.

Il est également envisageable de renforcer la liaison entre les moyens de support 11 de l'embase 2 et les moyens de support 12 du socle 3 grâce à tout moyen de fixation classique, en particulier à l'aide de clips.

Dans une version avantageuse de l'invention, les moyens de support 11 de l'embase 2 sont complétés chacun par une entretoise 13 s'étendant verticalement vers les moyens de support 12 du socle 3 de l'appareil à raclette 1.

Il est ainsi envisageable de moduler la hauteur de l'espace de rangement 8, pour permettre un empilement de plusieurs coupelles 9, 9', comme représenté sur les figures 1, 3 et 4.

Chaque entretoise 13 peut être solidaire du moyen de support 11 à laquelle elle est rattachée, mais peut également être amovible, laissant ainsi le choix à l'utilisateur de la positionner ou non en fonction de ses besoins.

En se référant au dispositif 2 de rangement de coupelles représenté sur les différentes figures 1 à 5, chaque moyen de support 11 de l'embase 2 comprend une entretoise 13 solidaire du dit moyen de support 11.

De façon optionnelle, l'embase 2 peut également comprendre des pieds 18 à partir desquels s'étendent ses moyens de support 11. De tels pieds s'étendent verticalement à partir du fond 6 de l'embase 2 et dans une direction opposée aux moyens de support 11

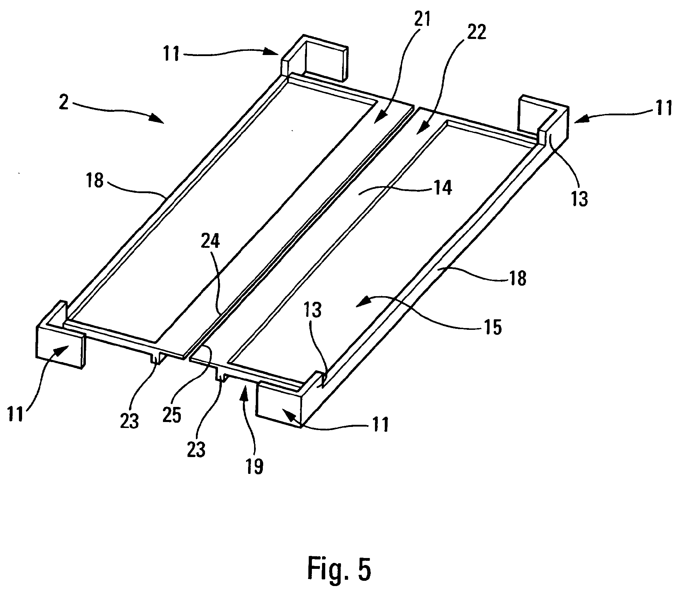

Un exemple de pieds 18 tels qu'envisagés ci-dessus est illustré par la configuration particulière de l'embase 2 des figures 1 et 5 : les deux pieds 18 représentés relient chacun deux moyens de support 11 de l'embase 2 et se trouvent par construction dans une direction opposée aux entretoises 13 et parallèle au fond 6 dont ils sont par ailleurs solidaires.

Ces pieds 18 permettent de créer un espace 19 entre la face inférieure 20 du fond 6 de l'embase 2 et le support sur lequel est disposé le dispositif 2 de rangement de coupelles (par exemple, une table).

La présence de pieds 18 au niveau de l'embase 2 crée un espace 19 sous le fond 6 de celle-ci et l'existence d'au moins deux ouvertures entre ces pieds 18 ouvre cet espace 19 sur l'extérieur, ce qui permet d'assurer une meilleure circulation d'air avec l'environnement de l'embase 2, et donc un refroidissement plus rapide des coupelles 9, 9' et 10, 10' disposées sur le fond 6. Cela peut permettre en outre d'augmenter la stabilité de l'appareil à raclette 1.

De préférence, et comme représenté à la figure 5, la face supérieure 14 du fond 6 de l'embase 2 comporte au moins une empreinte 15 en creux et de forme complémentaire de la face inférieure des coupelles 9, 9', 10, 10' que l'embase 2 est apte à recevoir.

Une telle conformation permet un positionnement plus aisé, car guidé, des coupelles 9, 9', 10, 10' dans l'espace de rangement 8 ainsi que leur maintien renforcé sur le fond 6 de l'embase 2.

De façon optionnelle, l'embase 2 peut être constituée par au moins deux pièces de forme complémentaire.

Un exemple particulier est donné par la figure 5 sur laquelle on observe que l'embase 2 est constituée par deux pièces rectangulaires 21, 22 comprenant chacune des pieds 18 reliant leurs deux moyens de support 11 respectifs et des pieds complémentaires 23 assurant la stabilité de chacune des pièces 21, 22 prises individuellement.

Le dispositif 2 de rangement de coupelles est alors réalisé en rapprochant ces deux pièces 21, 22 de manière à ce que leurs bords respectifs 24, 25 soient parallèles, voire adjacents.

On comprend que, dans cette configuration, et après séparation des deux parties 21, 22, le rangement d'un tel dispositif 2 selon l'invention est très aisé.

De préférence, l'embase 2 est constituée dans une matière thermoplastique, ce qui présente de nombreux avantages.

En particulier, l'utilisation d'un matériau thermoplastique permet de réaliser une embase 2 légère, facilement lavable et peu onéreuse du point de vue des coûts de fabrication ; de plus, il est ainsi possible de réaliser cette embase 2 dans n'importe quelle couleur, ajoutant aux avantages économiques mentionnés ci-dessus, un caractère esthétique.

Grâce à l'appareil à raclette 1 doté de l'embase 2 selon l'invention, l'utilisateur qui souhaite faire une pose dans sa dégustation de raclette, peut facilement introduire et déposer sa coupelle 10, 10' dans l'espace de rangement 8, le manche 16 de la coupelle 10, 10' étant laissé à l'extérieur de cet espace de rangement 8 dans une position dite "d'attente", pour une préhension ultérieure plus aisée, comme représenté sur les figures 1 et 2.

Lorsque l'utilisateur a terminé sa dégustation de raclette, il a alors la possibilité de disposer les coupelles 9, 9' dans l'espace de rangement 8 dans une position dite de "stockage", de telle sorte que le manche 16 des coupelles 9, 9' soit également disposé à l'intérieur de l'espace de rangement 8, comme représenté sur les figures 1, 3 et 4, et non plus vers l'extérieur de l'appareil à raclette 1, comme dans le cas précédent.

De préférence, les empreintes 15 pratiquées dans la partie supérieure 14 du fond 6 de l'embase 2 sont conformées de telle sorte à permettre de recevoir les coupelles 9, 9', 10, 10' aussi bien dans la position dite "d'attente" que dans la position dite de "stockage".

La hauteur de cet espace de rangement est bien évidemment calibrée, éventuellement au moyen d'entretoises 13, pour permettre le positionnement et l'empilement, dans la position dite de "stockage", de toutes les coupelles 9, 9', 10, 10' commercialisées avec l'appareil à raclette 1.

Après séparation du socle 3 et de l'embase 2, l'utilisateur peut disposer librement de l'embase 2 pour transporter non seulement les coupelles 9, 9', 10, 10', mais également tout autre élément, l'embase 2 devenant ainsi un plateau de transport.

Bien entendu, la présente invention n'est pas limitée aux modes de réalisation décrits ci-dessus et on peut y apporter des variantes d'exécution sans sortir du domaine de l'invention, telle que définie par les revendications.

Il est par exemple possible d'envisager une embase de conformation adaptée pour un socle d'appareil à raclette qui serait de section autre que rectangulaire, par exemple circulaire ou ovale.

On peut envisager également une embase se présentant sous la forme d'une plaque, dans l'hypothèse où les moyens de support du socle permettraient de délimiter un espace de rangement suffisant pour maintenir les coupelles dans une position dite de "stockage".

## Revendications

1. Dispositif de rangement de coupelles pour appareil à raclette (1) comprenant au moins un logement (8) accessible de l'extérieur de l'appareil à raclette (1) et apte à recevoir au moins une coupelle (9, 9', 10, 10'), **caractérisé en ce qu'**il est constitué par une embase (2) venant se placer sous ledit appareil (1) et séparable de celui-ci, ladite embase (2) comprenant un fond (6) délimitant, avec la face inférieure (7) de l'appareil à raclette (1), un espace de rangement (8) des coupelles (9, 9', 10, 10'), et des moyens de support (11) aptes à coopérer avec des moyens de support (12) complémentaires de l'appareil à raclette (1).

2. Dispositif selon la revendication 1, **caractérisé en ce que** les moyens de support (11) de l'embase (2) comprennent chacun une entretoise (13) s'étendant verticalement vers les moyens de support (12) de l'appareil à raclette (1).

3. Dispositif selon la revendication 1 ou 2, **caractérisé en ce que** l'embase (2) comprend en outre des pieds (18, 23).

4. Dispositif selon l'une quelconque des revendications 1 à 3, **caractérisé en ce que** la partie supérieure (14) du fond (6) de l'embase (2) comporte au moins une empreinte (15) en creux et de forme complémentaire de la face inférieure des coupelles (9, 9', 10, 10') que l'embase (2) est apte à recevoir.

5. Dispositif selon l'une quelconque des revendications 1 à 4, **caractérisé en ce que** l'embase (2) est constituée par au moins deux pièces (21, 22) de forme complémentaire.

6. Dispositif selon l'une quelconque des revendications 1 à 5, **caractérisé en ce que** l'embase (2) est constituée dans une matière thermoplastique.

7. Appareil à raclette comprenant un socle (3), un réflecteur (4) qui repose sur le socle (3) et qui est destiné à recevoir des coupelles (9, 9', 10, 10'), un système de chauffe (5) disposé au voisinage du réflecteur (4), **caractérisé en ce qu'**il comprend en outre une embase (2) amovible munie de moyens de support (11) sur lesquels vient reposer le socle (3), ladite embase (2) délimitant avec le socle (3) un espace de rangement (8) accessible de l'extérieur de l'appareil à raclette (1) et destiné à recevoir notamment des coupelles (9, 9', 10, 10').

8. Appareil à raclette selon la revendication 7, **caractérisé en ce que** le socle (3) comprend des moyens de support (12) complémentaires des moyens de support (11) de l'embase (2).

9. Appareil à raclette selon la revendication 8, **caractérisé en ce que** les moyens de support (11) de l'embase (2) et les moyens de support (12) du socle (3) de l'appareil à raclette (1) ont les uns une empreinte mâle, les autres une empreinte femelle.

10. Appareil à raclette selon la revendication 8 ou 9, **caractérisé en ce que** les moyens de support (12) du socle (3) comprennent des pieds (17).

## Claims

1. Device for the storage of trays for a raclette device (1) comprising at least one housing (8) accessible from the outside of the raclette device (1) and able to receive at least one tray (9, 9', 10, 10'), **characterized in that** it consists of a base (2) that is placed under the said device (1) and is separable from the latter, the said base (2) comprising a bottom (6) delimiting, with the lower face (7) of the raclette device (1), a storage space (8) for trays (9, 9', 10, 10'), and support means (11) able to cooperate with complementary support means (12) of the raclette device (1).

2. Device according to Claim 1, **characterized in that** the support means (11) of the base (2) each comprise a cross-piece (13) extending vertically towards the support means (12) of the raclette device (1).

3. Device according to Claim 1 or 2, **characterized in that** the base (2) furthermore comprises feet (18, 23).

4. Device according to any one of Claims 1 to 3, **characterized in that** the upper part (14) of the bottom (6) of the base (2) comprises at least one hollowed impression (15) having a shape complementary to the lower face of the trays (9, 9', 10, 10') that the base (2) is able to receive.

5. Device according to any one of Claims 1 to 4, **characterized in that** the base (2) consists of at least two parts (21, 22) of complementary shape.

6. Device according to any one of Claims 1 to 5, **characterized in that** the base (2) is made from a thermoplastic material.

7. Raclette device comprising a stand (3), a reflector (4) which rests on the stand (3) and which is intended to receive trays (9, 9', 10, 10'), a heating system (5) disposed in the vicinity of the reflector (4), **characterized in that** it furthermore comprises a detachable base (2) provided with support means (11) upon which the stand (3) is placed, the said base (2) delimiting with the stand (3) a storage space (8) accessible from outside of the raclette device (1) and intended to receive trays (9, 9', 10, 10') in particular.

8. Raclette device according to Claim 7, **characterized in that** the stand (3) comprises support means (12) complementary to the support means (11) of the base (2).

9. Raclette device according to Claim 8, **characterized in that** the support means (11) of the base (2) and the support means (12) of the stand (3) of the raclette device (1) have a male impression on one of them and a female impression on the other one.

10. Raclette device according to Claim 8 or 9, **characterized in that** the support means (12) of the stand (3) comprise feet (17) :

## Patentansprüche

1. Speichervorrichtung für Pfännchen für ein Raclette-Gerät (1) mit mindestens einem Speicherplatz (8), der von der Umgebung des Raclette-Geräts (1) zugänglich und geeignet ist, wenigstens ein Pfännchen (9, 9', 10, 10') aufzunehmen, **dadurch gekennzeichnet, daß** sie aus einer Sitzfläche (2) besteht, die unter dem Gerät (1) Platz findet und von diesem trennbar ist, wobei die Sitzfläche (2) einen Boden (6) aufweist, der mit der unteren Seite (7) des Raclette-Geräts (1) einen Speicherraum (8) für die Pfännchen (9, 9', 10, 10') begrenzt, und Stützen (11) aufweist, die zum Zusammenwirken mit komplementären Stützen (12) des Raclette-Geräts (1) geeignet sind.

2. Vorrichtung nach Anspruch 1, **dadurch gekennzeichnet, daß** die Stützen (11) der Sitzfläche (2) jede eine Wand (13) aufweisen, die sich vertikal zu den Stützen (12) des Raclette-Geräts (1) hin erstreckt.

3. Vorrichtung nach Anspruch 1 oder 2, **dadurch gekennzeichnet, daß** die Sitzfläche (2) außerdem Füße (18, 23) aufweist.

4. Vorrichtung nach einem der Ansprüche 1 bis 3, **dadurch gekennzeichnet, daß** der obere Teil (14) des Bodens (6) der Sitzfläche (2) mindestens eine Vertiefung (15) von komplementärer Form zur Unterseite der Pfännchen (9, 9', 10, 10') aufweist, welche die Sitzfläche (2) aufnehmen kann.

5. Vorrichtung nach einem der Ansprüche 1 bis 4, **dadurch gekennzeichnet, daß** die Sitzfläche (2) aus mindestens zwei Teilen (21, 22) von komplementärer Form besteht.

6. Vorrichtung nach einem der Ansprüche 1 bis 5, **dadurch gekennzeichnet, daß** die Sitzfläche (2) aus einem thermoplastischen Material besteht.

7. Raclette-Gerät mit einem Sockel (3), einem Reflektor (4), der auf dem Sockel (3) ruht und zur Aufnahme von Pfännchen (9, 9', 10, 10') bestimmt ist, einem in der Nähe des Reflektors (4) angeordneten Heizsystem (5), **dadurch gekennzeichnet, daß** es außerdem eine abnehmbare Sitzfläche (2) aufweist, die mit Stützen (11) versehen ist, auf denen sich der Sockel (3) abstützt, wobei die Sitzfläche (2) mit dem Sockel (3) einen Speicherraum (8) begrenzt, der von der Umgebung des Raclette-Geräts (1) her zugänglich ist und zur Aufnahme besonders von Pfännchen (9, 9', 10, 10') bestimmt ist.

8. Raclette-Gerät nach Anspruch 7, **dadurch gekennzeichnet, daß** der Sockel (3) Stützen (12) aüfweist, die komplementär zu Stützen (11) der Sitzfläche (2) sind:

9. Raclette-Gerät nach Anspruch 8, **dadurch gekennzeichnet, daß** die Stützen (11) der Sitzfläche (2) und die Stützen (12) des Sockels (3) des Raclette-Geräts die einen eine vospringende (männliche) Prägung, die anderen eine zurückspringende (weibliche) Prägung aufweisen.

10. Räclette-Gerät nach Anspruch 8 oder 9, **dadurch gekennzeichnet, daß** die Stützen (12) des Sockels (3) Füße (17) aufweisen.
